# EUROPÄISCHE PATENTSCHRIFT

(11) **EP 2 812 664 B1**
(45) Veröffentlichungstag und Bekanntmachung des Hinweises auf die Patenterteilung: **21.10.2015**
(21) Anmeldenummer: 13701424.7
(22) Anmeldetag: 22.01.2013
(51) Int. Cl.: G01L 23/22, G01L 23/26, F23Q 7/00

(54) **DRUCKMESSEINRICHTUNG FÜR EINEN BRENNRAUMDRUCKSENSOR**
PRESSURE MEASURING DEVICE FOR A SENSOR MEASURING PRESSURE IN A COMBUSTION CHAMBER
DISPOSITIF POUR MESURER PRESSION POUR UN CAPTEUR DE PRESSION DE CHAMBRE DE COMBUSTION

(30) Priorität: 10.02.2012 DE 102012202063
(43) Veröffentlichungstag der Anmeldung: 17.12.2014
(73) Patentinhaber: Robert Bosch GmbH, 70442 Stuttgart (DE)
(72) Erfinder: EBERHARDT, Rene, 99869 Schwabhausen (DE); SCHOLZEN, Holger, 70439 Stuttgart (DE); LUDWIG, Dieter, 71638 Ludwigsburg (DE); SCHILLING, Arzu, 71665 Vaihingen/Enz (DE)
(86) Internationale Anmeldenummer: PCT/EP2013/051072
(87) Internationale Veröffentlichungsnummer: WO 2013/117419

(56) Entgegenhaltungen:
- JP-A- 2010 133 603
- US-A1- 2009 314 061

## Beschreibung

Die Erfindung betrifft eine Druckmesseinrichtung, insbesondere eine Druckmesseinrichtung für einen Brennraumdrucksensor für eine Verbrennungskraftmaschine.

### Stand der Technik

Druckmesseinrichtungen gemäß des Standes der Technik weisen einen Druckaufnehmer und einen innerhalb eines Gehäuses angeordneten Drucksensor auf. Zur Erfassung des Brennraumdruckes wird der Druck des Brennraums über den Druckaufnehmer an den Drucksensor übertragen. Die Signale des Drucksensors werden über Anschlussleitungen an eine externe Signalverarbeitungsanlage weitergeleitet.

Um der externen Signalverarbeitungsanlage ein weniger störanfälliges Signal bereitzustellen, ist aus DE 10 2004 043 874 A1 bekannt, das Signal des Drucksensors bereits innerhalb einer Druckmessglühkerze mittels einer Signalverarbeitungseinheit zu verstärken. Dabei ist die Signalverarbeitungseinheit in den Drucksensor integriert.

Aus JP 2009 22 90 39 A1 ist weiterhin eine Druckmessglühkerze mit einem Glühkerzengehäuse, einem Glühstift, einem im Glühkerzengehäuse angeordneten Drucksensor und einer Steckerverbindung für die Signalleitungen des Drucksensors und für die Glühstromleitung bekannt. Innerhalb des Glühkerzengehäuses ist eine Signalverarbeitungseinheit auf einem flachen Träger zwischen Drucksensor und einem separaten Steckergehäuse für die Steckerverbindung angeordnet.

DE 10 2011 088 474.2 bezieht sich auf eine Druckmesseinrichtung. Die Druckmesseinrichtung dient der Erfassung eines Brennraumdruckes einer Brennkraftmaschine. Die Druckmesseinrichtung umfasst einen Druckaufnehmer, einen Drucksensor und ein Steckergehäuse für eine elektrische Steckerverbindung. Der Druckaufnehmer ist dem Brennraumdruck ausgesetzt und überträgt den Brennraumdruck auf den Drucksensor zumindest mittelbar. Innerhalb der Druckmesseinrichtung ist ein Träger mit einer Aufnahme für eine Signalverarbeitungseinheit bzw. für einen Schaltkreis der Signalverarbeitungseinheit vorgesehen. Der Träger ist mit dem Steckergehäuse verbunden, derart, dass der Träger und das Steckergehäuse eine einstückige, kompakte Kontaktiereinheit bildet, die sich in axialer Längserstreckung der Druckmesseinrichtung erstreckt.

Dokument JP2010133603 offenbart ebenfalls eine Druckmesseinrichtung.

### Darstellung der Erfindung

Erfindungsgemäß wird eine Druckmesseinrichtung für einen Brennraumdrucksensor für eine Verbrennungskraftmaschine vorgeschlagen, die ein Halteteil mit einer Auflagefläche für eine Signalverarbeitungseinheit, eine Glühstromschiene, Sensorelementstromschienenteilen sowie Sensorelementstromschienen umfasst. Ferner weist die Druckmesseinrichtung ein Steckerschnittstellenteil auf, welches Sensorkontakte und einen Glühstromkontakt aufweist. Erfindungsgemäß sind zumindest die Sensorkontakte im Steckerschnittstellenteil in dessen Material eingespritzt. Die Einspritzung der Sensorkontakte in das Material, bei dem es sich um Kunststoffmaterial handelt, beim Steckerschnittstellenteil ermöglicht eine kostengünstige Fertigung und das Sicherstellen einer verbesserten Dichtheit zwischen den Stromschienen und des sich an diese anschmiegenden Materials der Kunststoffumspritzung.

Des Weiteren kann in vorteilhafter Weiterbildung der erfindungsgemäß vorgeschlagenen Lösung mindestens ein Glühstromkontakt ebenfalls in das Material des Steckerschnittstellenteils eingespritzt werden, was ebenfalls zu einer Verbesserung der Dichtheit in Bezug auf den mindestens einen Glühstromkontakt führt.

In einer Ausführungsvariante der erfindungsgemäß vorgeschlagenen Lösung besteht die Möglichkeit, die Sensorkontakte einteilig auszuführen. Gemäß dieser Ausführungsvariante umfassen die Sensorkontakte einen hülsenförmig ausgebildeten Kontaktring, von dem jeweils streifenförmige Kontaktfahnen ausgehen. Ausgangsmaterial für derart ausgebildete einteilige Sensorkontakte sind dünne Metallbleche, die rund gewickelt werden und über einen Ringverschluss beispielsweise im Wege des Formschlusses ihre Hülsenform erhalten. Von einer Stirnseite des Kontaktringes erstreckt sich jeweils eine als Blechstreifen ausgebildete Kontaktfahne.

In einer weiteren Ausführungsmöglichkeit des der Erfindung zugrundeliegenden Gedankens besteht die Möglichkeit, die Sensorkontakte mehrteilig auszubilden. Auch gemäß dieser Ausführungsvariante umfassen die Sensorkontakte jeweils einen Kontaktring, an den jedoch im Unterschied zur erstgenannten Ausführungsmöglichkeit der Sensorkontakte eine Kontaktfahne in Form eines Metallstreifens stoffschlüssig gefügt, bevorzugt angeschweißt ist. Gemäß beider Ausführungsvarianten erstrecken sich von den hülsenförmig ausgebildeten Kontaktringen der Sensorkontakte die Kontaktfahnen in unterschiedlicher Länge in Streifenform in Richtung auf eine Fügestelle zwischen dem Steckerschnittstellenteil und dem Halteteil der erfindungsgemäß vorgeschlagenen Druckmesseinrichtung.

Endbereiche der Sensorkontakte und mindestens eines Glühstromkontaktes einerseits und Kontaktierungsenden der Sensorelementstromschienen und der Glühstromschiene im Halteteil andererseits, werden in vorteilhafter Weise radial nach außen orientiert. Dabei können die Enden der Sensorkontakte und des mindestens einen Glühstromkontaktes sowie die Kontaktierungsenden der Sensorelementstromschiene und der Glühstromschiene in vorteilhafter Weise um 90° umgelenkt radial nach außen geformt werden. Dadurch kann in vorteilhafter Weise erreicht werden, dass bei Herstellung von elektrisch leitend ausgebildeten Fügestellen, die insbesondere im Wege des Schweißens erzeugt werden, eine sehr gute Zugänglichkeit der miteinander zu fügenden Bauteilen entsteht, wobei die Orientierung der stoffschlüssig miteinander zu verbindenden Bauteile während des Fügevorganges durch eine spezielle Fügehilfe unterstützt wird. Dazu umfasst beispielsweise das Halteteil an seinem dem Sensorschnittstellenteil gegenüberliegenden Stirnseite eine zapfenförmig ausgebildete Fügehilfe, die mit einer Gegengeometrie in der gegenüberliegenden Stirnseite des Sensorschnittstellenteiles zusammenwirkt. Dadurch kann erreicht werden, dass die Enden der Sensorkontakte und das Ende des mindestens einen Glühstromkontaktes einerseits, sowie die Kontaktierungsenden der Sensorelementstromschienen und der Glühstromschiene andererseits, zueinander finden und über die obenstehende eine codierte Geometrie bildende Fügehilfe zueinander positioniert bleiben. Insbesondere können am Steckerschnittstellenteil-Baugruppen, d.h. im Bereich der Gegengeometrie unsymmetrische Zapfen in Form von Klemmnasen ausgebildet werden. Dabei kann es sich beispielsweise um drei im Winkel von 120° versetzt zueinander orientierte Klemmnasen handeln. Aufgrund der Asymmetrie der Fügehilfe ist es möglich, beide Baugruppen, d.h. das Halteteil sowie das Steckerschnittstellenteil nur in einer, nämlich der korrekten Orientierung zur Ausbildung der elektrisch leitenden Kontaktstellen miteinander zu fügen. Die im Rahmen der Fügehilfe vorgeschlagene Klemmnasen verhindern, dass beide Baugruppen, d.h. das Halteteil sowie das Steckerschnittstellenteil ihre Orientierung, d.h. den Kontakt verlieren, bevor die stoffschlüssige Verbindungen an den Kontaktstellen ausgebildet sind.

### Vorteile der Erfindung

Die erfindungsgemäß vorgeschlagene Lösung bietet einerseits ein montagefreundliches koaxiales Stecksystem, durch welches eine kundenseitige Akzeptanz erhöht wird. Die Sensorkontakte sind aufgrund des Vorhandenseins der rund gewickelten Kontaktringe, seien sie ein-, seien sie mehrteilig ausgebildet, sehr kostengünstig zu umspritzen, so dass eine kostengünstige Fertigung einerseits und eine Verbesserung der Dichtheit andererseits erreicht werden kann. Ferner lässt sich eine Signalverarbeitungseinheit integrieren, da diese auf einer Vertiefung oder einer Anflachung des Halteteiles der erfindungsgemäß vorgeschlagenen Druckmesseinrichtung aufgebracht werden kann. Unterschiedlichen Einbaulängen können dahingehend Rechnung getragen werden, dass insbesondere das Halteteil in unterschiedlichen Längen ausgebildet werden kann, was im Vergleich zum Steckerschnittstellenteil relativ einfach ausgebildet ist. Dadurch lässt sich eine Längenvarianz mit reduzierten Kosten und einer verbesserten Fertigbarkeit herstellen.

Neben der Möglichkeit, die Glühstromschiene mit Kunststoff zu umspritzen, besteht alternativ die Möglichkeit einer nachträglichen Montage der Glühstromschiene. Damit kann die Geradheit des Halteteiles verbessert werden, um Verformungen des Halteteiles zu vermeiden, die sich bei einer Umspritzung einstellen können.

### Kurze Beschreibung der Zeichnungen

Anhand der Zeichnung wird die Erfindung nachstehend eingehender beschrieben.

Es zeigt:
- Figur 1: das erfindungsgemäß vorgeschlagene Kontaktierungsmodul im gefügten Zustand, ein Halteteil und ein Steckerschnittstellenteil umfassend,
- Figur 2: das Halteteil gemäß der Anordnung gemäß Figur 1,
- Figur 3: gesondert dargestellte Stromschienen bzw. Sensorkontaktschienen und Sensorkontaktschienenteile,
- Figur 4: eine perspektivische Draufsicht auf das Halteteil mit Auflagefläche für eine Signalverarbeitungseinheit,
- Figur 5: eine perspektivische teilweise aufgeschnittene Darstellung des Sensorschnittstellenteils des erfindungsgemäß vorgeschlagenen Kontaktierungsmoduls,
- Figur 6: dessen dem Halteteil zuweisende Stirnseite mit Gegengeometrie für die Fügehilfe,
- Figur 7: die zu kontaktierende Stirnseite des Steckerschnittstellenteils,
- Figur 8: eines Ausführungsvariante der Sensorkontakte mit Kontaktring und streifenförmig von diesen abgehenden Kontaktfahnen,
- Figur 9: in schematischer Weise die Stromschienenabschnitte, die sich sowohl durch Halteteil als auch durch Steckerschnittstellenteil erstrecken und
- Figur 10: eine rückwärtige perspektivische Ansicht des Kontaktierungsendes des Steckerschnittstellenteiles.

### Ausführungsvarianten

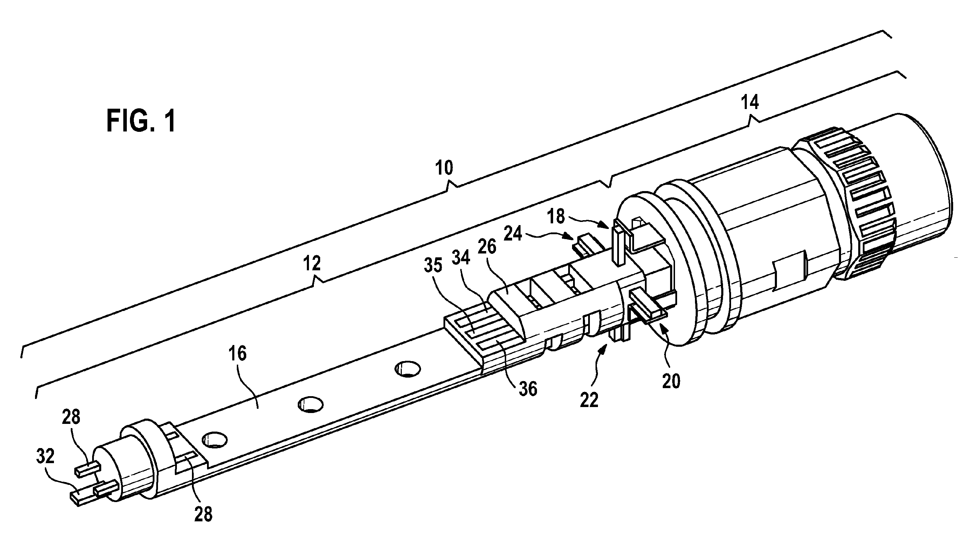

Figur 1 zeigt das erfindungsgemäß vorgeschlagene Kontaktierungsmodul im montierten Zustand, bei dem ein Halteteil und ein Steckerschnittstellenteil miteinander gefügt sind. Wie der perspektivischen Darstellung gemäß Figur 1 entnehmbar ist, umfasst das Halteteil eine eben ausgebildete Auflagefläche. Auf der Auflagefläche 16 wird eine in Figur 1 nicht näher dargestellte Signalverarbeitungseinheit aufgenommen. In einer Kunststoffumspritzung 26 des Halteteiles 12 sind am vorderen Ende ein Ende einer Glühstromschiene 32 sowie Sensorelementstromschienen-Teile 28 zu erkennen, die von der Kunststoffumspritzung 26 umschlossen sind. Auf der gegenüberliegenden Seite der Aufnahmefläche 16 sind Enden einer ersten Sensorelementstromschiene 34, einer weiteren zweiten Sensorelementstromschiene 35 sowie einer dritten Sensorelementstromschiene 36 zu erkennen. Diese sind ebenfalls in die Kunststoffumspritzung 26 des Halteteiles 12 eingebettet. Sowohl die Oberseiten der Sensorelementstromschienen-Teile 28 als auch die nach oben freiliegenden Abschnitte der Sensorelementstromschienen 34, 35 und 36 werden über Anschlusspads und Bondverbindungen beispielsweise mit der in Figur 1 nicht dargestellten Signalverarbeitungseinheit elektrisch leitend verbunden, die auf der Auflagefläche 16 des Halteteiles 112 des erfindungsgemäß vorgeschlagenen Kontaktierungsmoduls 10 positioniert wird.

Aus Figur 1 geht hervor, dass die Sensorelementstromschienen 34, 35 und 36 sowie die Glühstromschiene 32 jeweils abgewinkelte Endbereiche aufweisen, die an Kontaktstellen 18, 20, 22 und24 mit korrespondierenden Kontakten des Steckerschnittstellenteiles 14 verbunden sind. Aus der perspektivischen Ansicht gemäß Figur 1 geht hervor, dass die Kontaktstellen 18, 20, 22 und 24 entlang der Mantelfläche der Kunststoffumspritzung 26 jeweils um 90° versetzt zueinander positioniert sind und sich im Wesentlichen radial nach außen erstrecken. Dies erleichtet im erheblichen Maße die Zugänglichkeit und die Ausführbarkeit von stoffschlüssigen Verbindungen, beispielsweise die Erzeugung von Schweißverbindungen und trägt daher im erheblichem Maße zur vereinfachten Montage bzw. einer vereinfachten automatisierten Erzeugung von stoffschlüssigen Verbindungen an den Kontaktstellen 18, 20, 22 und 24 bei.

Aus Figur 1 geht hervor, dass der an den Kontaktstellen 18, 20, 22, 24 kontaktierte Steckerschnittstellenteil 14 ein wesentlich zylindrisches Aussehen hat und ebenfalls von einer Kunststoffumspritzung umgeben ist, wie nachfolgend noch eingehender beschrieben werden wird.

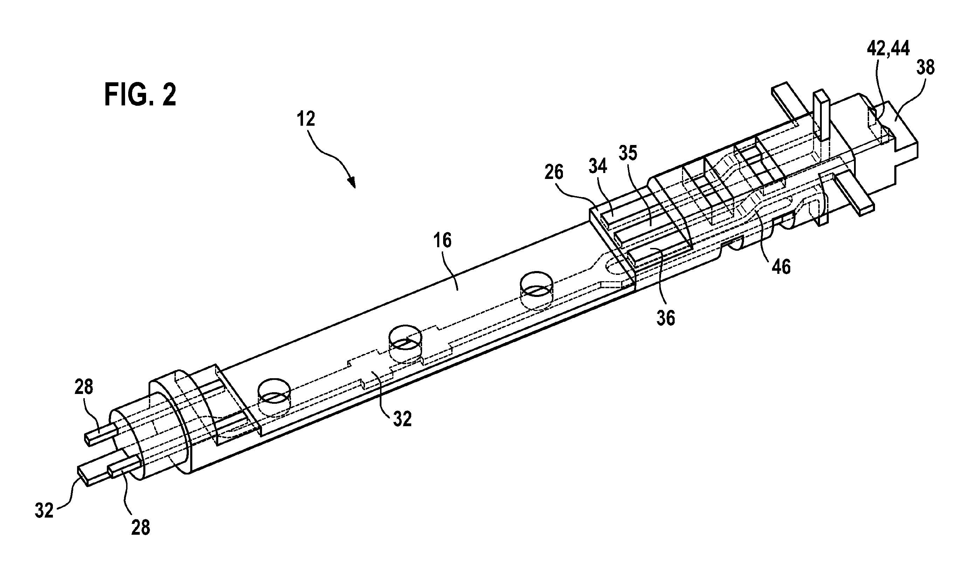

Figur 2 zeigt eine perspektivische Ansicht des Halteteiles mit von der Kunststoffumspritzung umschlossenen Stromschienen für Glühstrom und Sensorelement.

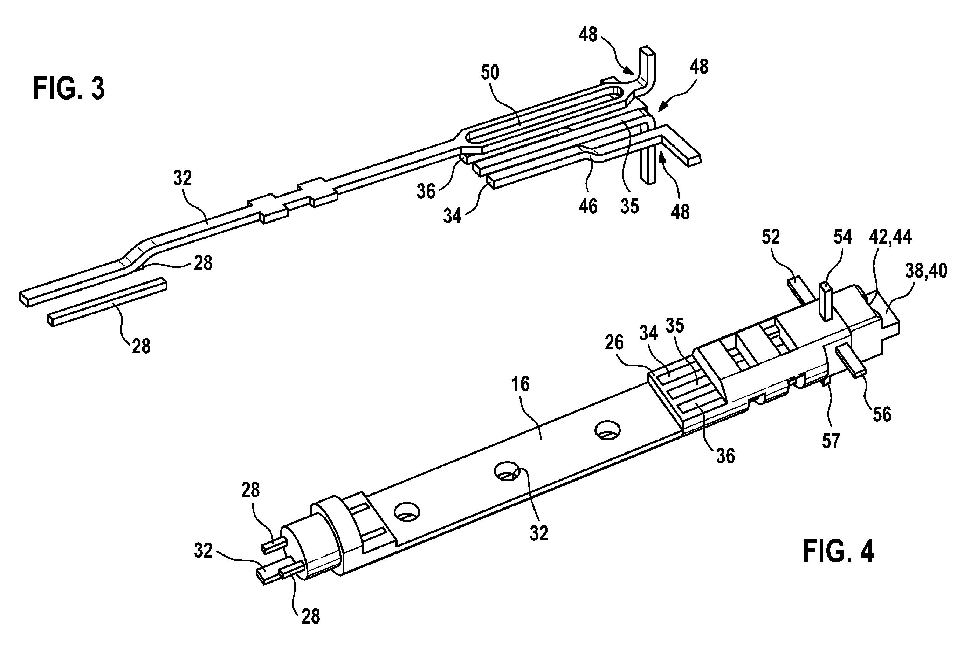

Figur 2 zeigt dass, die Sensorelementstromschienen-Teile 28 sowie das vordere Ende der Glühstromschiene 32 in der Kunststoffumspritzung 26 vergossen sind. Unterhalb der Auflagefläche 16, die zur Aufnahme der Signalverarbeitungseinheit dient, verläuft die Glühstromschiene 32 in der Kunststoffumspritzung 26. Aus Figur 2 geht des Weiteren hervor, dass sich die erste Sensorelementstromschiene 34, die zweite Sensorelementstromschiene 35 sowie die dritte Sensorelementstromschiene 36 in Richtung einer Fügehilfe 38, die hier zapfenförmig ausgebildet ist, erstrecken. Enden der besagten Stromschienen 34, 35 und 36 sind mit einer Radial-Umbiegung 48 (vergleiche Darstellung gemäß Figur 3) aus der Kunststoffumspritzung 26 radial hinaus geführt, um die in Figur 1 dargestellten Kontaktstellen 18, 20, 22, 24 zu bilden, welche in der Regel als stoffschlüssige Verbindungen, insbesondere als Schweißverbindungen ausgeführt sind.

Der perspektivischen Ansicht gemäß Figur 2 ist des Weiteren zu entnehmen, dass die erste Sensorelementstromschiene 34 sowie die dritte Sensorelementstromschiene 36 einen gekröpft ausgebildeten Abschnitt 46 aufweisen. Figur 2 zeigt des Weiteren, dass innerhalb der Kunststoffumspritzung 26, in welche die Sensorelementschienen 34, 35, 36 sowie die Glühstromschiene 32 eingespritzt sind, die Glühstromschiene 32 und die zweite Sensorelementstromschiene 35 übereinanderliegend verlaufen.

In der Darstellung gemäß Figur 3 sind die einen Strom leitenden Komponenten in ihrer Geometrie einzeln herausgezeichnet, wobei die in der perspektivischen Darstellung gemäß Figur 2 dargestellt Kunststoffumspritzung zur besseren Darstellbarkeit fortgelassen wurde.

Figur 3 zeigt das in Figur 2 in perspektivischer Darstellung dargestellte Halteteil von der Unterseite her.

Im vorderen Bereich des Halteteiles 12 erstrecken sich die Sensorelementstromschienen 28 sowie die Glühstromschiene 32. Die Glühstromschiene 32 erstreckt sich von einem Ende des Halteteiles 12 zum gegenüberliegenden Ende des Halteteiles 12 und weist in ihrem Bereich, der unterhalb der zweiten Sensorelementstromschiene 35 verläuft, eine Teilung 50 auf. Figur 3 zeigt, dass jede der Stromschienen, die Glühstromschiene 32, die erste Sensorelementstromschiene 34, die zweite Sensorelementstromschiene 35 wie auch die dritte Sensorelementstromschiene 36 einen Endabschnitt aufweist, der eine Radialumbiegung 48 aufweist. Position 46 bezeichnet den gekröpften Abschnitt der ersten Sensorelementstromschiene 34 wie auch der dritten Sensorelementstromschiene 36, wie bereits in Zusammenhang mit der perspektivischen Darstellung gemäß Figur 2 erwähnt.

Der perspektivischen Darstellung gemäß Figur 4 ist zu entnehmen, dass aus der Mantelfläche der Kunststoffumspritzung 26 des Halteteiles 12 ein erstes Kontaktierungsende 52 der ersten Sensorelementstromschiene 34 in einem 90°-Winkel radial herausgeführt ist. Korrespondierend dazu erstreckt sich ein drittes Kontaktierungsende 56 der dritten Sensorelementstromschiene 36 auf der gegenüberliegenden Seite der Kunststoffumspritzung 26 ebenfalls in radiale Richtung aus der Kunststoffumspritzung 26 hinaus. Ein zweites Kontaktierungsende 54 der zweiten Sensorelementstromschiene 35 steht über die Oberseite der Kunststoffumspritzung 26 des in Figur 4 perspektivisch dargestellten Halteteiles 12 des Kontaktierungsmoduls 10 heraus. Durch die Kunststoffumspritzung 26 verdeckt ist ein Kontaktierungsende 57 der Glühstromschiene 32, welches sich durch die gesamte Kunststoffumspritzung 26 nach außen erstreckt.

Wie Figur 4 des Weiteren zeigt, weist das Halteteil 12 des erfindungsgemäß vorgeschlagenen Kontaktierungsmoduls 10 an dem dem Steckerschnittstellenteil 14 zuweisenden Ende eine zapfenförmig ausgebildete Fügehilfe 38 auf. Die Fügehilfe 38 kann beispielsweise einen Zentrierzapfen 40 umfassen. Des Weiteren umfasst die Fügehilfe 38 Klemmnasen 42, 44, welche beim Fügen des Halteteiles 12 und des Steckerschnittstellenteiles 14 mittels der Fügehilfe 38 und einer entsprechend ausgebildeten Gegengeometrie 76, die sich im Steckerschnittstellenteil 14 befindet, die korrekte Positionierung der Kontaktierungsenden 52, 54, 56, 57 mit entsprechenden Kontakten des Steckerschnittstellenteiles 14. Die richtige Positionierung bzw. Orientierung der Kontaktierungsenden 52, 54, 56, 57 während der Erzeugung der Kontaktstellen 18, 20, 22, 24 (vergleiche Darstellung gemäß Figur 1) mit entsprechenden Kontakten des Steckerschnittstellenteiles 14, erleichtert die Erzeugung der stoffschlüssigen Verbindungen an den Kontaktstellen 18, 20, 22, 24, vergleiche Darstellung gemäß Figur 1.

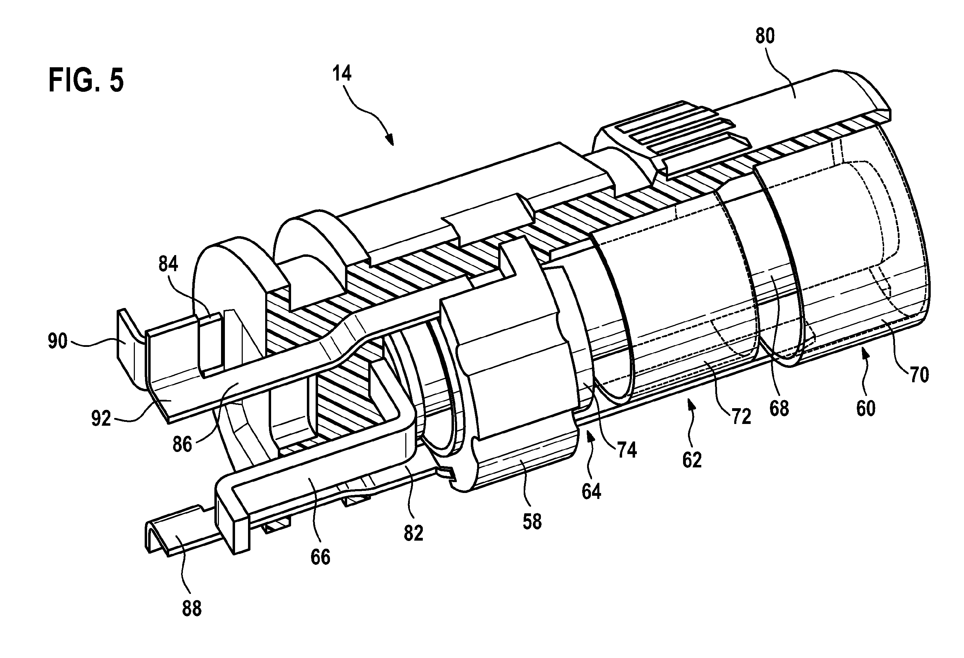

Figur 5 zeigt einen perspektivischen Halbschnitt des Steckerschnittstellenteiles des erfindungsgemäß vorgeschlagenen Kontaktierungsmoduls.

Wie Figur 5 zeigt, umfasst das Steckerschnittstellenteil 14 eine Abstandshülse 58 Die Aufgabe der Abstandshülse 58 liegt darin, die umliegenden Stromschienen beim Umspritzen durch den Spritzdruck in ihrer Position zu stabilisieren und einen direkten Kontakt der Stromschienen miteinander zu verhindern, was zum Auftreten eines elektrischen Kurzschlusses führen könnte. Die Abstandshülse 58 hat darüber hinaus die Aufgabe, eine Relativbewegung der Stromschienen in Bezug aufeinander allein aufgrund der Wirkung der Schwerkraft zu vermeiden. Das Steckerschnittstellenteil 14 gemäß der Darstellung in Figur 5 hat ein im Wesentlichen zylindrisches Aussehen und umfasst analog zur Kunststoffumspritzung 26 des Halteteiles 12 ebenfalls eine Kunststoffumspritzung 80. In diese sind ein erster Kontakt 60, ein zweiter Kontakt 62 und ein dritter Kontakt 64 eingespritzt. Des Weiteren umfasst der Steckerschnittstellenteil 14 gemäß der Darstellung in Figur 5 einen beispielsweise als Doppelwinkel ausgebildeten Glühstromkontakt 66, der einen Glühstrombolzen 68 kontaktiert. Der Glühstrombolzen 68 wird von einem ersten Kontaktring 70 des ersten Sensorkontaktes 60, von einem zweiten Kontaktring 72 des zweiten Sensorkontaktes 62 und schließlich von einem dritten Kontaktring 74 des dritten Sensorkontaktes 64 koaxial umschlossen. Die Kontaktringe 70, 72, 74 sind jeweils Teile der Sensorkontakte 60, 62, und 64. Die Sensorkontakte 60, 62 und 64 können einteilig oder auch zweiteilig ausgebildet sein.

Aus der Darstellung gemäß Figur 5 geht hervor, dass beispielsweise der erste Sensorkontakt 60 den ersten Kontaktring 70 umfasst, von dem sich streifenförmig eine erste Kontaktfahne 82 erstreckt. Die erste Kontaktfahne 82 umfasst ein erstes Ende 88.

Des Weiteren ist in die Umspritzung 80 des Steckerschnittstellenteiles 14 der zweite Sensorkontakt 62 eingebettet. Der zweite Sensorkontakt 62 umfasst den zweiten Kontaktring 72, der hinsichtlich seines Durchmessers etwas kleiner ist als der erste Kontaktring 70 des ersten Sensorkontaktes 60. Vom zweiten Kontaktring 72 des zweiten Sensorkontaktes 62 aus erstreckt sich eine zweite Kontaktfahne 84, die in einem zweiten Ende 90 ausläuft, welches an der zweiten Kontaktstelle 20 mit dem entsprechenden zweiten Kontaktierungsende 54 stoffschlüssig verbunden, beispielsweise verschweißt wird.

Schließlich ist in die Umspritzung 80 des Steckerschnittstellenteiles 14 gemäß der Darstellung in Figur 5 der dritte Kontaktring 74 des dritten Sensorkontaktes 64 eingebettet. Dieser weist hinsichtlich seines Durchmessers, verglichen mit dem ersten Kontaktring 70 und dem zweiten Kontaktring 72 einen nochmals verringerten Durchmesser auf. Vom dritten Kontaktring 74 des dritten Sensorkontaktes 64 aus erstreckt sich eine dritte Kontaktfahne 86, die in einem dritten Ende 92 ausläuft. Ferner ist in der Darstellung gemäß Figur 5 an der Seite, an der die Kontaktfahnen 82, 84, 86 bzw. der Glühstromkontakt 86 aus der dem Halteteil 12 zuweisenden Stirnseite des Steckerschnittstellenteiles hinaustreten, eine Gegengeometrie 76 angeordnet. Die Gegengeometrie 76 ist Teil der Fügehilfe 38, die in den Figuren 2 und 4 bereits angedeutet wurde.

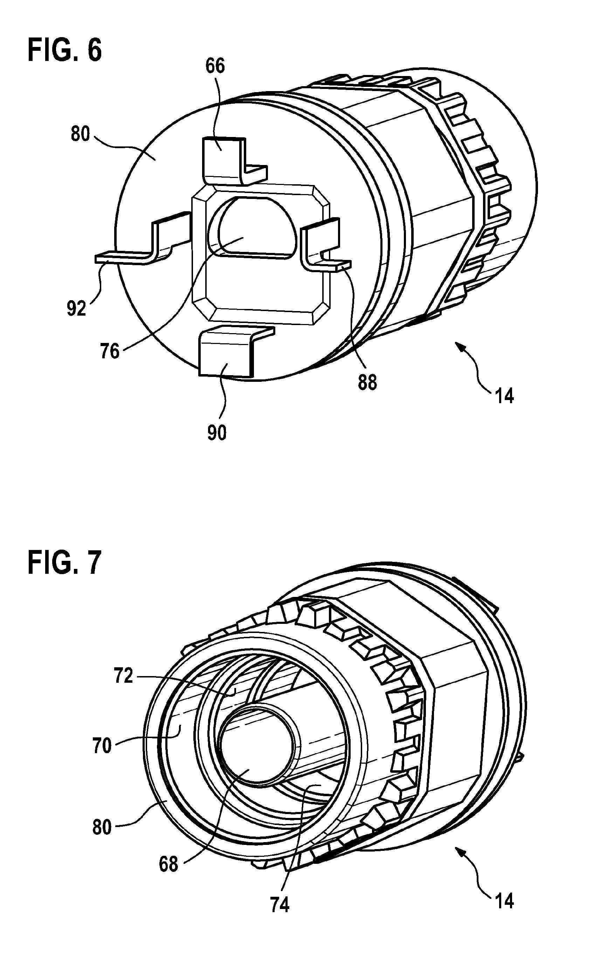

Figur 6 zeigt eine Draufsicht auf die mit dem Halteteil 12 zu fügende Stirnseite des Steckerschnittstellenteiles 14 des erfindungsgemäß vorgeschlagenen Kontaktierungsmoduls 10. Die dargestellte Gegengeometrie 76 ist komplementär zur Fügehilfe 38, die einen Zentrierzapfen 40 umfassen kann, ausgebildet. Durch die gewellte Gegengeometrie 76 und die entsprechende komplementäre Konfiguration der Fügehilfe 38 ist sichergestellt, dass ein Fügen des Halteteiles 12 mit dem Steckerschnittstellenteil 14 nur in der Position erfolgen kann, in der die richtigen Kontakte in richtiger Orientierung in Bezug auf die zu bildenden Kontaktstellen 18, 20, 22 und 24 (vergleiche Darstellung gemäß Figur 1) erzeugt werden können. Figur 6 zeigt des Weiteren, dass am stirnseitigen Ende des Steckerschnittstellenteiles 14 die zu kontaktierenden Enden 88, 90, 92 der Kontaktfahnen 82, 84, 86 sowie das zu kontaktierende Ende des Glühstromkontaktes 66 aus dem Steckerschnittstellenteil 14 hervorragen.

In Bezug auf die Figuren 5 und 6 ist anzumerken, dass in dieser Ausführungsvariante die Sensorkontakte 60, 62, 64 zumindest zweiteilig ausgebildet sind, d.h. die Kontaktringe 70, 72, 74 zylindrisch ausgebildet sind, eine Art kurze Hülse bilden, die mit den Kontaktfahnen 82, 84, 86 gemäß der Darstellung in Figur 5 beispielsweise stoffschlüssig verschweißt werden können.

Es besteht andererseits alternativ auch die Möglichkeit, sämtliche Sensorkontakte 60, 62, 64 statt zweiteilig auch einteilig auszuführen.

Der perspektivischen Ansicht gemäß Figur 7 ist eine Ansicht des Steckerschnittstellenteiles des Kontaktierungsmoduls von der Kabelbaumseite her zu entnehmen.

Aus der perspektivischen Wiedergabe gemäß Figur 7 geht hervor, dass das Steckerschnittstellenteil 14 die Umspritzung 80 umfasst, in der der erste Kontaktring 70 schließlich der zweite Kontaktring 72 sowie der dritte Kontaktring 74 eingespritzt sind. Die Kontaktringe 70, 72, 74 der Sensorkontakte 60, 62, und 64 umschließen den Glühstrombolzen 68 jeweils konzentrisch.

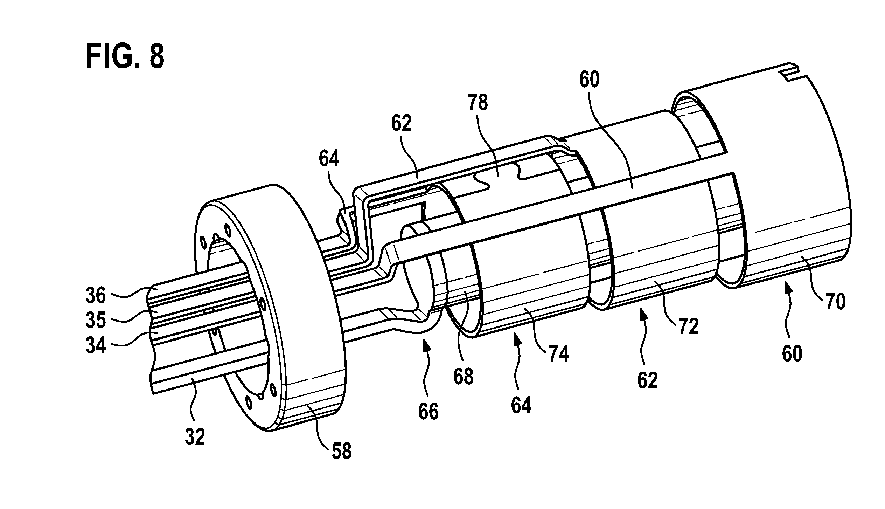

Der Figurensequenz der Figuren 8, 9 und 10 sind einteilig ausgebildete Sensorkontakte zu entnehmen.

Während bei der in Figur 1 dargestellten zweiteiligen Ausführungsvariante des Kontaktierungsmoduls 10 mit Halteteil 12 und Steckerschnittstellenteil 14 die Kontaktstellen 18, 20, 22 und 24 ausgeführt sind, sind bei der in der Figurensequenz der Figuren 8, 9 und 10 dargestellten einteiligen Ausführungsvariante die Kontaktstellen 18, 20, 22 und 24 wie in Figur 1 dargestellt, nicht mehr erforderlich. Bei der in den Figuren 8, 9 und 10 dargestellten einteiligen Ausführungsvariante können die Kontaktstellen 18, 20, 22 und 24 entfallen, da die Sensorkontakte 60, 62, 64 bzw. der Glühstromkontakt 66 unmittelbar in die Stromschienen 34, 35, 36 und 32 übergehen.

Der Darstellung gemäß Figur 8 ist unter Verzicht auf die Darstellung der Umspritzung 80 des Steckerschnittstellenteiles 14 zu entnehmen, dass der erste Sensorkontakt 60 den ersten Kontaktring 70 umfasst, von dem einstückig eine Kontaktfahne ausgeht, die unmittelbar in die erste Sensorelementstromschiene 34 übergeht. In analoger Weise umfasst der zweite Sensorkontakt 62 den zweiten Kontaktring 72 von dessen Stirnseite sich eine Kontaktfahne aus erstreckt, die ein Teil mit dem zweiten Kontaktring 72, ist und die nach einer entsprechenden Kröpfung unmittelbar in die zweite Sensorelementstromschiene 35 übergeht. Schließlich ist der perspektivischen Wiedergabe gemäß Figur 8 zu entnehmen, dass ausgehend vom dritten Kontaktring 74 eine Kontaktschiene von dessen Mantelfläche abzweigt, die unmittelbar in die dritte Sensorelementstromschiene 36 übergeht. Bei der in der Figurensequenz gemäß der Figuren 8, 9 und 10 dargestellten einteiligen Ausführungsvariante sind hinsichtlich ihrer Einbaulage die erste Sensorelementstromschiene 34 und dritte Sensorelementstromschiene 36 vertauscht.

Figur 8 zeigt des Weiteren, dass der Glühstrombolzen 68 unmittelbar durch die Glühstromschiene 62, insbesondere durch einen mit einer kreisförmigen Kontaktfläche beschaffenen Glühstromkontakt 66 der Glühstromschiene 32 kontaktiert ist.

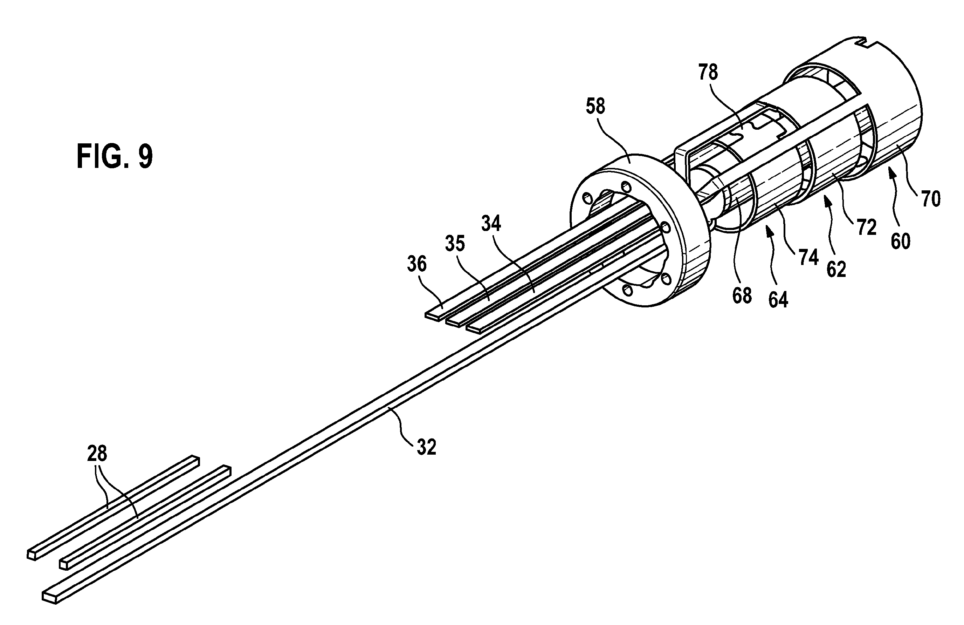

Der Darstellung gemäß Figur 9 ist zu entnehmen, dass der erste Sensorkontakt 60, ausgehend vom ersten Kontaktring 70 unmittelbar in die erste Sensorelementstromschiene 34 übergeht, die sich durch das Halteteil 12 des erfindungsgemäß vorgeschlagenen Kontaktierungsmoduls 10 erstreckt. Wie aus der Darstellung gemäß Figur 9 hervorgeht, erstrecken sich die Sensorelementstromschienen 34, 35, 36 bis an eine in Figur 9 nicht dargestellte Auflagefläche für eine ebenfalls nicht dargestellte Signalverarbeitungseinheit.

Sowohl die Umspritzung 80 des Steckerschnittstellenteiles 14 als auch die Kunststoffumspritzung 26 des Halteteiles 12 sind in der Darstellung gemäß Figur 9 nicht dargestellt, es sind nur die Sensorkontakte 60, 62, 64 sowie die mit diesen einstückig ausgebildeten Sensorelementstromschienen 34, 35, 36, bzw. die Sensorelementstromschienen-Teile 28 sowie die Glühstromschiene 32 dargestellt.

Aus den Figuren 8 und 9 geht hervor, dass bei einteiliger Ausbildung der Sensorkontakte 60, 62, 64 diese aus einem dünnen Blech gefertigt werden können. Durch entsprechende Biege- und Stanzvorgänge, können die Kontaktringe 70, 72, 74 der Sensorkontakte 60, 62, 64 beispielsweise rund gewickelt werden und mit einem Ringverschluss 78, beispielsweise in Form eines Schwalbenschwanzes oder einer vergleichbaren Geometrie an der Mantelfläche gefügt werden. Eine Herstellung der Sensorkontakte 60, 62, 64 aus einem Stück erlaubt im Wege des Ausstanzens die Ausbildung der später in Ringform gebogenen Kontaktringe 70, 72, 74 von denen aus sich die Kontaktfahnen 82, 84, 86, die bereits die Stromschienen 34, 35, 36 bzw. die Glühstromschiene 32 bilden, direkt anschließen.

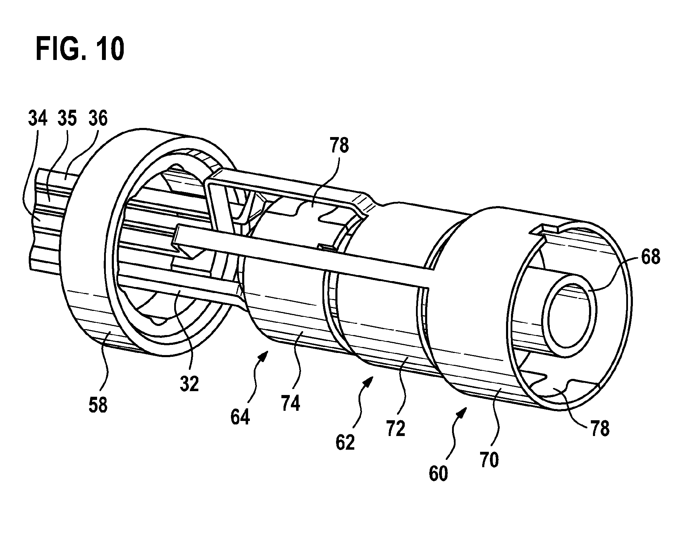

Figur 10 zeigt eine Ansicht der Kontaktringe 70, 72, 74 der Sensorkontakte 60, 62, 64 von der Kabelbaumseite her.

Auch bei der Darstellung gemäß Figur 10 ist erkennbar, dass bei einstückiger Ausbildung der Sensorelementkontakte 60, 62, 64 die Kontaktringe 70, 72, 74 durch die Ringverschlüsse 78 verschlossen sind, die in beliebigen Positionen entlang des Umfanges der Kontaktringe 70, 72, 74 angeordnet sein können. Mit Position 58 ist in den Figuren 8, 9 und 10 jeweils die Abstandshülse 28 bezeichnet.

Die einteilige Ausbildung der Sensorkontakte 60, 62, 64 zeichnet sich durch einen Verzicht auf die Kontaktstellen 18, 20, 22 (vergleiche Darstellung gemäß Figur 1 aus, da die einstückigen Kontaktfahnen, die Teile der Kontaktringe 70, 72, 74 sind, unmittelbar in die entsprechenden Sensorelementstromschienen 34, 35, 36 bzw. in die Glühstromschiene 32 übergehen.

## Patentansprüche

1. Druckmesseinrichtung für einen Brennraumdrucksensor einer Verbrennungskraftmaschine, mit einem Halteteil (12), welches eine Auflagefläche (16) für eine Signalverarbeitungseinheit, eine Glühstromschiene (32), Sensorelement-Stromschienenteile (28) sowie Sensorelementstromschienen (34, 35, 36) umfasst und mit einem Steckerschnittstellenteil (14), welches Sensorkontakte (60, 62, 64) und einen Glühstromkontakt (66) aufweist, wobei zumindest die Sensorkontakte (60, 62, 64) vom Material (80) des Steckerschnittstellenteiles (14) umspritzt sind, **dadurch gekennzeichnet,**
**dass** elektrische Kontaktstellen (18, 20, 22, 24) zwischen den Kontaktierungsenden (52, 54, 56, 57) der Sensorelementstromschienen (34, 35, 36) und der Glühstromschiene (32) einerseits und Enden (88, 90, 92) der Sensorkontakte (60, 62, 64) und des Glühstromkontaktes (66) andererseits, stoffschlüssig, insbesondere durch Verschweißen, erzeugt sind.

2. Druckmesseinrichtung gemäß Anspruch 1, **dadurch gekennzeichnet, dass** der Glühstromkontakt (66) vom Material (80) des Steckerschnittstellenteiles (14) umspritzt ist.

3. Druckmesseinrichtung gemäß Anspruch 1, **dadurch gekennzeichnet, dass** die Sensorkontakte (60, 62, 64) einteilig ausgeführt sind.

4. Druckmesseinrichtung gemäß dem vorhergehenden Anspruch, **dadurch gekennzeichnet, dass** die Sensorkontakte (60, 62, 64) jeweils einen Kontaktring (70, 72, 74) umfassen, von denen jeweils streifenförmige Kontaktfahnen (82, 84, 86) ausgehen.

5. Druckmesseinrichtung gemäß Anspruch 3, **dadurch gekennzeichnet, dass** die Kontaktringe (70, 72, 74) rund gewickelt sind und einen Ringverschluss (78) aufweisen.

6. Druckmesseinrichtung gemäß einem der vorhergehenden Ansprüche, **dadurch gekennzeichnet, dass** die Sensorkontakte (60, 62, 64) mehrteilig ausgeführt sind und jeweils einen Kontaktring (70, 72, 74) umfassen, der mit jeweils einer Kontaktfahne (82, 84, 86) stoffschlüssig gefügt ist.

7. Druckmesseinrichtung gemäß einem der vorhergehenden Ansprüche, **dadurch gekennzeichnet, dass** Enden (80, 90, 92) der Sensorkontakte (60, 62, 64) und des Glühstromkontaktes (66) radial nach außen, insbesondere um 90° radial nach außen orientiert sind.

8. Druckmesseinrichtung gemäß einem der vorhergehenden Ansprüche, **dadurch gekennzeichnet, dass** Kontaktierungsenden (52, 54, 56, 57) der Sensorelementstromschienen (34, 35, 36) und der Glühstromschiene (32) radial nach außen, insbesondere um 90° radial nach außen orientiert sind.

9. Druckmesseinrichtung gemäß einem der vorhergehenden Ansprüche, **dadurch gekennzeichnet, dass** das Halteteil (12) und das Steckerschnittstellenteil (14) durch eine eine Positionierhilfe (42, 44) aufweisende Fügehilfe (38, 76) relativ zueinander derart positioniert sind, dass Positionen der Kontaktstellen (18, 20, 22, 24) zwischen den Kontaktierungsenden (52, 54, 56, 57) und den Enden (88, 90, 92) der Sensorkontakte (60, 62, 64) und des Glühstromkontaktes (66) während des Fügevorganges aufrechterhalten bleiben.

## Claims

1. Pressure measuring device for a combustion chamber pressure sensor of an internal combustion engine, having a holding part (12) which comprises a support area (16) for a signal processing unit, a glow busbar (32), sensor element busbar parts (28) and sensor element busbars (34, 35, 36), and having a plug interface part (14) which has sensor contacts (60, 62, 64) and a glow current contact (66), wherein at least the sensor contacts (60, 62, 64) are encapsulated by injection moulding with the material (80) of the plug interface part (14), **characterized**
**in that** electrical contact points (18, 20, 22, 24) are produced between the contact-making ends (52, 54, 56, 57) of the sensor element busbars (34, 35, 36) and the glow busbar (32) on the one hand and ends (88, 90, 92) of the sensor contacts (60, 62, 64) and of the glow current contact (66) on the other hand in a cohesive manner, in particular by welding.

2. Pressure measuring device according to Claim 1, **characterized in that** the glow current contact (66) is encapsulated by injection moulding with the material (80) of the plug interface part (14).

3. Pressure measuring device according to Claim 1, **characterized in that** the sensor contacts (60, 62, 64) are of integral design.

4. Pressure measuring device according to the preceding claim, **characterized in that** the sensor contacts (60, 62, 64) each comprise a contact ring (70, 72, 74) from which respective strip-like contact lugs (82, 84, 86) extend.

5. Pressure measuring device according to Claim 3, **characterized in that** the contact rings (70, 72, 74) are wound in a round manner and have a ring closure (78).

6. Pressure measuring device according to one of the preceding claims, **characterized in that** the sensor contacts (60, 62, 64) are of multipartite design and each comprise a contact ring (70, 72, 74) which is cohesively joined to a respective contact lug (82, 84, 86).

7. Pressure measuring device according to one of the preceding claims, **characterized in that** ends (80, 90, 92) of the sensor contacts (60, 62, 64) and of the glow current contact (66) are oriented radially outward, in particular radially outward through 90°.

8. Pressure measuring device according to one of the preceding claims, **characterized in that** contact-making ends (52, 54, 56, 57) of the sensor element busbars (34, 35, 36) and of the glow busbars (32) are oriented radially outward, in particular radially outward through 90°.

9. Pressure measuring device according to one of the preceding claims, **characterized in that** the holding part (12) and the plug interface part (14) are positioned relative to one another by a joining aid (38, 76) which has a positioning aid (42, 44) in such a way that positions of the contact points (18, 20, 22, 24) between the contact-making ends (52, 54, 56, 57) and the ends (88, 90, 92) of the sensor contacts (60, 62, 64) and of the glowing current contact (66) are maintained during the joining process.

## Revendications

1. Dispositif de mesure de la pression, pour un capteur de pression pour chambre de combustion d'un moteur à combustion interne, avec une pièce de retenue (12), laquelle comprend une surface d'appui (16) pour une unité de traitement de signaux, une barre de connexion (32) pour courant de préchauffage, des parties de barre de connexion (28) pour éléments capteurs et des barres de connexion (34, 35, 36) pour éléments capteurs et avec une pièce d'interface de connexion (14), laquelle comporte des contacts (60, 62, 64) pour capteurs et un contact (66) pour courant de préchauffage,
au moins les contacts (60, 62, 64) pour capteurs étant enrobés par la matière (80) de la pièce d'interface de connexion (14),
**caractérisé en ce que**
des points de contact (18, 20, 22, 24) électriques sont créés par liaison par matière, notamment par soudage entre les extrémités (52, 54, 56, 57) de mise en contact des barres de connexion (34, 35, 36) pour éléments capteurs et la barre de connexion (32) de courant de préchauffage d'une part et des extrémités (88, 90, 92) des contacts (60, 62, 64) pour capteurs et du contact (66) pour courant de préchauffage d'autre part.

2. Dispositif de mesure de la pression selon la revendication 1, **caractérisé en ce que** le contact (66) pour courant de préchauffage est enrobé par la matière (80) de la pièce d'interface à connecteurs (14).

3. Dispositif de mesure de la pression selon la revendication 1, **caractérisé en ce que** les contacts (60, 62, 64) pour capteurs sont réalisés en monobloc.

4. Dispositif de mesure de la pression selon la revendication précédente, **caractérisé en ce que** les contacts (60, 62, 64) pour capteurs comportent chacun une bague de contact (70, 72, 74), de chacune desquelles partent des ailettes de contact (82, 84, 86) en forme de bandes.

5. Dispositif de mesure de la pression selon la revendication 3, **caractérisé en ce que** les bagues de contact (70, 72, 74) sont enroulées en rond et comportent une fermeture (78) de bague.

6. Dispositif de mesure de la pression selon l'une quelconque des revendications précédentes, **caractérisé en ce que** les contacts (60, 62, 64) pour capteurs sont réalisés en plusieurs éléments et comportent chacun une bague de contact (70, 72, 74) qui est assemblée par liaison par matière avec chaque fois une ailette de contact (82, 84, 86).

7. Dispositif de mesure de la pression selon l'une quelconque des revendications précédentes, **caractérisé en ce que** des extrémités (80, 90, 92) des contacts (60, 62, 64) pour capteurs et du contact (66) pour courant de préchauffage sont orientées en direction radiale vers l'extérieur, notamment de 90° en direction radiale vers l'extérieur.

8. Dispositif de mesure de la pression selon l'une quelconque des revendications précédentes, **caractérisé en ce que** des extrémités (52, 54, 56, 57) de mise en contact des barres de connexion (34, 35, 36) pour éléments de capteurs et de la barre de connexion (32) de courant de préchauffage sont orientées en direction radiale vers l'extérieur, notamment de 90° en direction radiale vers l'extérieur.

9. Dispositif de mesure de la pression selon l'une quelconque des revendications précédentes, **caractérisé en ce que** la pièce de retenue (12) et la pièce d'interface à connecteurs (14) sont positionnées l'une par rapport à l'autre par un auxiliaire d'assemblage (38, 76) comportant un auxiliaire de positionnement (42, 44), de sorte que les positions des points de contact (18, 20, 22, 24) entre les extrémités (52, 54, 56, 57) de mise en contact et les extrémités (88, 90, 92) des contacts (60, 62, 64) pour capteurs et du contact (66) pour courant de préchauffage restent maintenues pendant l'opération d'assemblage.
